# EUROPÄISCHE PATENTSCHRIFT

(11) **EP 2 846 286 B1**
(45) Veröffentlichungstag und Bekanntmachung des Hinweises auf die Patenterteilung: **10.04.2019**
(21) Anmeldenummer: 14184048.8
(22) Anmeldetag: 09.09.2014
(51) Int. Cl.: G06F 21/14, G06F 21/79, G06F 21/85

(54) **Verfahren und Datenspeichersystem zum Schutz eines Festkörper-Datenspeichers gegen unauthorisierten Zugriff**
Method and data storage system for protecting a fixed body data memory against unauthorized access
Procédé et système de stockage de données destinés à la protection d'un dispositif de stockage de données de corps solides contre un accès non autorisé

(30) Priorität: 10.09.2013 DE 102013109902
(43) Veröffentlichungstag der Anmeldung: 11.03.2015
(73) Patentinhaber: Deutsche Telekom AG, 53113 Bonn (DE)
(72) Erfinder: Moos, Rainer, 57080 Siegen (DE); Breuer, Jörg, 57223 Kreuztal (DE); Ranke, Lars, 51580 Reichshof-Denklingen (DE)
(74) Vertreter: Blumbach · Zinngrebe Patent- und Rechtsanwälte

(56) Entgegenhaltungen:
- EP-A2- 0 919 904
- US-A1- 2010 268 953

## Beschreibung

Die Erfindung betrifft ein Verfahren sowie ein Datenspeichersystem zum Schutz wenigstens eines vorbestimmten Speicherbereichs eines Festkörper-Datenspeichers gegen unauthorisierten Zugriff.

In der Informationstechnik eingesetzte Speichermedien werden überwiegend derart konstruiert, dass sie beim In-Kontakt-treten mit einem Rechnersystem automatisch von diesem erkannt und anschließend zum Schrieben, Lesen oder Löschen zur Verfügung stehen. Es sind zahlreiche standardisierte Schnittstellen, wie zum Beispiel USB-, SCSI-, iSCSI-, SATA-, Bluetooth-, LAN-, WLAN-, NFC-Schnittstellen bekannt, über die ein Speichermedium an ein Rechnersystem angeschaltet werden kann. Mit Hilfe von standardisierten Informationen, wie z. B. Partitionstabellen, werden das Rechnersystem und Anwendungen über die Größe und Adressierung des Speichers informieren.

Aus EP 0 919 904 A2 ist ein Verfahren zum Schutz von Daten bekannt, die auf einem Wechselspeichermedium wie zum Beispiel einer magnetooptischen Diskette gespeichert sind, wobei ein Benutzer, wenn er auf das Speichermedium zugreift, ein Passwort eingeben muss, welches mit einem vorgegebenen Passwort verglichen wird. Wenn die Passwörter nicht übereinstimmen, wird der Zugriff verweigert, und wenn sie übereinstimmen, erhält der Nutzer Zugriff auf einen Speicherbereich des Speichermediums.

Seit einiger Zeit werden immer häufiger Festkörper-Speicher, auch als Halbleiterspeicher oder Solid State Speicher bezeichnet, eingesetzt. Solche Festkörper-Speicher haben eine definierte Speichergröße und weisen fest angeordnete Speicherelemente auf, die über eine entsprechende Steuerungstechnik verwaltet und adressiert werden. Festkörper-Speicher werden beispielsweise als Wechseldatenträger in Form von Speicher-Sticks (Memory Stick) implementiert. Auch Computer-Festplatten werden zunehmend als Festkörper-Speicher, sogenannte Solid State Devices, hergestellt.

Ohne besondere Maßnahmen kann ein beliebiger Nutzer den gesamten Speicherbereich eines Festkörpers-Speichers ansehen und nutzen. Um die freie Verfügbarkeit des Festkörper-Speichers gezielt zu beschränken, werden Informationen durch kryptografische Verschlüsselungsverfahren gegen unauthorisierten Zugriff geschützt. Verschlüsselte Informationen müssen jedoch vor einer Nutzung wieder entschlüsselt werden, was gegebenenfalls zu einem störenden Datenverlust führen kann.

Der Erfindung liegt die Aufgabe zugrunde, ein Verfahren sowie ein Datenspeichersystem zum Schutz wenigstens eines vorbestimmten Speicherbereichs eines Festkörper-Datenspeichers gegen unauthorisierten Zugriff zu Verfügung zu stellen, die ohne komplexe Soft- und/oder Hardware zuverlässig und ohne Datenverlust einen Festkörper-Datenspeicher gegen unauthorisierten Zugriff schützen können.

Ein Kerngedanke der Erfindung kann darin gesehen werden, mittels eines definierten Zusammenspiels zwischen einem an sich bekannten Speichercontroller und der Sicherheitseinrichtung den gesamten Speicherbereich eines Festkörpers-Datenspeichers oder wenigstens einen vorbestimmten Teil des gesamten Speicherbereichs unter der Kontrolle eines authorisierten Nutzers unsichtbar zu machen bzw. sichtbar werden zu lassen. Im unsichtbaren Zustand präsentiert sich der Festkörper-Datenspeicher einem Nutzer so, als gäbe es überhaupt keinen verborgenen Speicherbereich.

Gemäß einem weiteren Aspekt der Erfindung kann hierzu der Standardbefehlssatz - Verwalten, Lesen, Schreiben oder Löschen - eines herkömmlichen Speichercontrollers um einen durch die Sicherheitseinrichtung gesicherten Befehlssatz erweitert werden. Der gesicherte Befehlssatz kann mittels der benutzerbezogenen, durch eine individuelle Kennung geschützten Sicherheitseinrichtung nach Eingabe der individuellen Kennung zur Benutzung durch den Speichercontroller freigeschaltet werden kann.

Das oben genannte technische Problem wird zum einen durch die Verfahrensschritte des Anspruchs 1 gelöst.

Demgemäß wird ein Verfahren zum Schutz wenigstens eines vorbestimmten Speicherbereichs eines Festkörper-Datenspeichers gegen einen unauthorisierten Zugriff zur Verfügung gestellt. Das Verfahren weist folgende Verfahrensschritte auf:
Speichern eines ersten, gesicherten Befehlssatzes für einen Speichercontroller zur Steuerung des Festkörper-Datenspeichers, wobei der erste Befehlssatz einen ersten Befehl zum Aktivieren eines vorbestimmten Speicherbereichs und einen zweiten Befehl zum Deaktivieren des vorbestimmten Speicherbereichs enthält;
Eingeben an einer Eingabeeinrichtung einer individuellen Kennung für eine benutzerbezogene, durch eine individuelle Kennung geschützte Sicherheitseinrichtung;
unter Ansprechen auf die individuelle Kennung Freigeben des ersten, gesicherten Befehlssatz zur Nutzung durch den Speichercontroller unter Steuerung der benutzerbezogenen Sicherheitseinrichtung, wobei der vorbestimmte Speicherbereich, sofern er unter Steuerung des Speichercontrollers aktiviert worden ist, auf einer Anzeigeeinrichtung sichtbar gemacht und unter Verwendung eines zweiten, ungesicherten Befehlssatzes unter Steuerung des Speichercontrollers bearbeitet werden kann, und wobei der vorbestimmte Speicherbereich, sofern er unter Steuerung des Speichercontrollers deaktiviert worden ist, ausgeblendet wird.

Dank des Verfahrens kann ein berechtigter Nutzer erst nach Eingabe seiner individuellen Kennung und der erfolgreichen Überprüfung der Kennung durch die Sicherheitseinrichtung auf den vorbestimmten Speicherbereich zugreifen.

Angemerkt sei, dass die Reihenfolge der zuvor genannten Verfahrensschritte die chronologische Reihenfolge deren Ausführung nicht festlegt.

Es wird darauf hingewiesen, dass
- das Merkmal "vorbestimmter Speicherbereich" den Gesamtspeicherbereich oder einen vorbestimmten Teil des Gesamtspeicherbereichs des Festkörper-Datenspeichers mit erfasst,
- das Merkmal "individuelle Kennung" eine persönliche Identifikationsnummer (PIN) mit erfasst,
- das Merkmal "Bearbeiten des vorbestimmten Speicherbereichs" vorzugsweise die standardisierten Befehle bzw. Funktionen eines herkömmlichen Speichercontrollers, wie z. B. das Löschen, Schreiben, Lesen und Verwalten mit erfasst, und
- das Merkmal "den vorbestimmten Speicherbereich ausblenden" den Sachverhalt mit erfasst, dass der vorbestimmte Speicherbereich auf einer Anzeigeeinrichtung vollkommen unsichtbar gemacht werden kann, sodass ein Nutzer keine Anhaltspunkte finden kann, dass überhaupt ein gegen unauthorisierten Zugriff geschützter Speicherbereich konfiguriert worden ist.

Zudem sei angemerkt, dass es sich bei dem Festkörper-Datenspeicher um einen Halbleiter-Speicher definierter Speichergröße handeln kann.

Der erste, gesicherte Befehlssatz kann einen dritten Befehl zum Konfigurieren des Gesamtspeicherbereichs des Festkörper-Datenspeichers enthalten. Mit Hilfe des dritten Befehls ist ein Benutzer in der Lage, den Festkörper-Datenspeicher derart zu konfigurieren, dass ein vorbestimmter Speicherbereich durch einen authorisierten Nutzer gezielt unsichtbar oder gezielt sichtbar gemacht werden kann.

Gemäß einer vorteilhaften Ausgestaltung kann der Schutz des vorbestimmten Speicherbereichs gegen unauthorisierten Zugriff dadurch sichergestellt werden, dass der Speichercontroller und die Sicherheitseinrichtung derart zusammenspielen, dass Aufrufe zur Ausführung der Befehle des freigegebenen ersten Befehlssatzes nur mittels der Sicherheitseinrichtung dem Speichercontroller übergeben werden.

Ein Ausspähen des ersten Befehlssatzes kann dadurch verhindert werden, dass nach Eingabe der individuellen Kennung eine Authentifizierung zwischen der Sicherheitseinrichtung und dem Speichercontroller zur Herstellung einer sicheren Verbindung durchgeführt wird, und dass die Aufrufe zur Ausführung der Befehle des freigegebenen Befehlssatzes über die sichere Verbindung zum Speichercontroller übertragen werden.

Um den vorbestimmten, gegen unauthorisierten Zugriff geschützten Speicherbereich einfacher verwalten zu können, kann vorzugsweise unter Steuerung der Sicherheitseinrichtung auf einer Anzeigeeinrichtung, die Bestandteil eines Rechners oder Rechnersystems sein kann, eine Benutzerschnittstelle zur Eingabe der Aufrufe zur Ausführung der Befehle des freigegebenen ersten Befehlssatzes erzeugt werden. Hierzu kann eine geeignete Management- oder Steuersoftware auf dem Rechner installiert werden.

Der gesamte Speicherbereich des Festkörper-Datenspeichers kann partitioniert werden, so dass mehrere separate vorbestimmte Speicherbereiche definiert werden können, denen jeweils eine individuelle Kennung bzw. Sicherheitseinrichtung zugeordnet wird. Für jede individuelle Kennung kann ein individueller erster Befehlssatz gespeichert werden, dessen Befehle den dazugehörenden vorbestimmten Speicherbereich vorzugsweise identifizieren und adressieren. Nach Eingabe einer der individuellen Kennungen kann der dazugehörende, individuelle erste Befehlssatz freigegeben werden, so dass der jeweilige vorbestimmte Speicherbereich von der authorisierten Person aktiviert oder deaktiviert, d. h. kontrolliert unsichtbar bzw. sichtbar gemacht werden kann.

Das oben genannte technische Problem wird zum Anderen durch die Merkmale des Anspruchs 7 gelöst.

Demgemäß wird ein Datenspeichersystem zum Schutz eines vorbestimmten Speicherbereichs eines Festkörper-Datenspeichers gegen unauthorisierten Zugriff geschaffen.

Das Datenspeichersystem weist einen Festkörper-Datenspeicher mit einem vordefinierten Speicherbereich auf. Weiterhin ist ein Speichercontroller vorgesehen, der auf einen standardisierten Befehlssatz zugreifen kann, um standardisierte Funktionen, wie z. B. Speichern, Löschen, Schreiben und Verwalten ausführen kann.

Weiterhin ist eine Speichereinrichtung vorgesehen, in welcher ein erster, gesicherter Befehlssatz abgelegt ist. Der erste Befehlssatz enthält einen ersten Befehl zum Aktivieren des vorbestimmten Speicherbereichs und einen zweiten Befehlssatz zum Deaktivieren des vorbestimmten Speicherbereichs. Eine benutzerbezogene, durch eine individuelle Kennung geschützte Sicherheitseinrichtung ist dazu ausgebildet, unter Ansprechen auf den Empfang einer individuellen Kennung den ersten Befehlssatz zur Nutzung durch den Speichercontroller freizugeben. Der Speichercontroller ist dazu ausgebildet, unter Ansprechen auf den ersten Befehl zu veranlassen, dass
- der vorbestimmte Speicherbereich auf einer Anzeigeeinrichtung sichtbar ist,
- unter Verwendung eines zweiten, ungesicherten Befehlssatzes, das kann der standardisierte Befehlssatz sein, der angezeigte, vorbestimmte Speicherbereich bearbeitet werden kann, und dass
- unter Ansprechen auf den zweiten Befehl der vorbestimmte Speicherbereich ausgeblendet wird.

Gemäß einer vorteilhaften Ausgestaltung, kann ein Schutz gegen unauthorisierten Zugriff auf den vorbestimmten Speicherbereich dadurch sichergestellt werden, dass die Sicherheitseinrichtung dazu ausgebildet ist, Aufrufe zur Ausführung der Befehle des freigegebenen ersten Befehlssatzes über eine drahtgebundene oder drahtlose Verbindung zum Speichercontroller zu übertragen.

Ein Ausspähen des gesicherten ersten Befehlssatzes kann dadurch verhindert werden, dass die Sicherheitseinrichtung dazu ausgebildet ist, eine Authentifizierung zwischen der Sicherheitseinrichtung und dem Speichercontroller zur Herstellung einer sicheren drahtgebundenen oder sicheren drahtlosen Verbindung zu steuern, so dass die Aufrufe zur Ausführung der Befehle des ersten Befehlssatzes über die sichere Verbindung übertragen werden.

Gemäß einer vorteilhaften Ausbildung sind der Festkörper-Datenspeicher, der Speichercontroller, die Speichereinrichtung und die Sicherheitseinrichtung in einem Wechseldatenträger, insbesondere in einem Speicher-Stick implementiert, der eine Schnittstelleneinrichtung zur Kommunikation mit einer Rechnereinrichtung aufweist. Die Schnittstelleneinrichtung kann Standard-Schnittstellentreiber, wie z. B. USB, CF, SD, PCI, SCSI, iSCSI, SATA, Bluetooth, LAN, WLAN, NFC und dergleichen enthalten.

Alternativ können der Festkörper-Datenspeicher, der Speichercontroller und die Speichereinrichtung in einem Gehäuse und die Sicherheitseinrichtung in einem separaten Gehäuse, angeordnet sein, die sich an unterschiedlichen Orten befinden können. Dem Festkörper-Datenspeicher kann eine Schnittstelleneinrichtung zur Kommunikation mit einer Recheneinrichtung und der Sicherheitseinrichtung zugeordnet sein.

Auch in diesem Fall kann der Festkörper-Datenspeicher Teil eines Wechseldatenträgers, insbesondere eines Speicher-Sticks sein.

Angemerkt sei an dieser Stelle, dass die Kommunikation zwischen Festkörper-Datenspeicher, Recheneinrichtung und Sicherheitseinrichtung über eine drahtlose und/oder drahtgebundene Verbindung erfolgen kann.

In der Recheneinrichtung kann eine Management- oder Steuersoftware abgelegt sein, mittels der die Recheneinrichtung in die Lage versetzt werden kann, eine Benutzerschnittstelle bereitzustellen, die dazu ausgebildet ist, eine Kommunikation des Benutzers mit der Sicherheitseinrichtung zu ermöglichen.

Bei der Sicherheitseinrichtung kann es sich um ein Sicherheitsmodul, eine Chipkarte oder dergleichen handeln, die unter zugriff auf eine geeignete Management- oder Steuersoftware die Kommunikation mit einem Benutzer und dem Speichercontroller steuert.

Um das Datenspeichersystem für mehrere Nutzer zu öffnen, kann der Gesamtspeicher des Festkörper-Datenspeichers mehrere vorbestimmte Speicherbereiche aufweisen, denen jeweils zumindest eine separate, benutzerbezogene und durch eine individuelle Kennung geschützte Sicherheitseinrichtung zugeordnet ist. Zudem kann in der Speichereinrichtung für jede Sicherheitseinrichtung bzw. jede individuelle Kennung ein individueller erster Befehlssatz gespeichert sein, dessen Befehle Angaben zur Identifizierung der Sicherheitseinrichtung und des dazugehörenden Speicherbereichs enthalten können. Zudem ist jede Sicherheitseinrichtung dazu ausgebildet, unter Ansprechen auf den Empfang der jeweiligen individuellen Kennung den ihr zugeordneten ersten Befehlssatzes zur Nutzung durch den Speichercontroller freizugeben, so dass der dazugehörende vorbestimmte Speicherbereich durch einen authorisierten Benutzer aktiviert oder deaktiviert werden kann.

Die Erfindung wird nachfolgend anhand zweier Ausführungsbeispiele näher erläutert. Es zeigen:
- Fig. 1: das Blockschaltbild einer Datenspeicher- und Rechnersystem zum Schutz wenigstens eines vorbestimmten Speicherbereichs eines Festkörper-Datenspeichers gegen unauthorisierten Zugriff,
- Fig. 2: das Blockschaltbild eines alternativen Datenspeicher- und Rechnersystems, in welchem die Sicherheitseinrichtung außerhalb des Speicher-Sticks angeordnet ist, und
- Fig. 3: einen beispielhaft partitionierten Gesamtspeicher des in Fig. 1 und Fig. 2 gezeigten Festkörper-Datenspeichers.

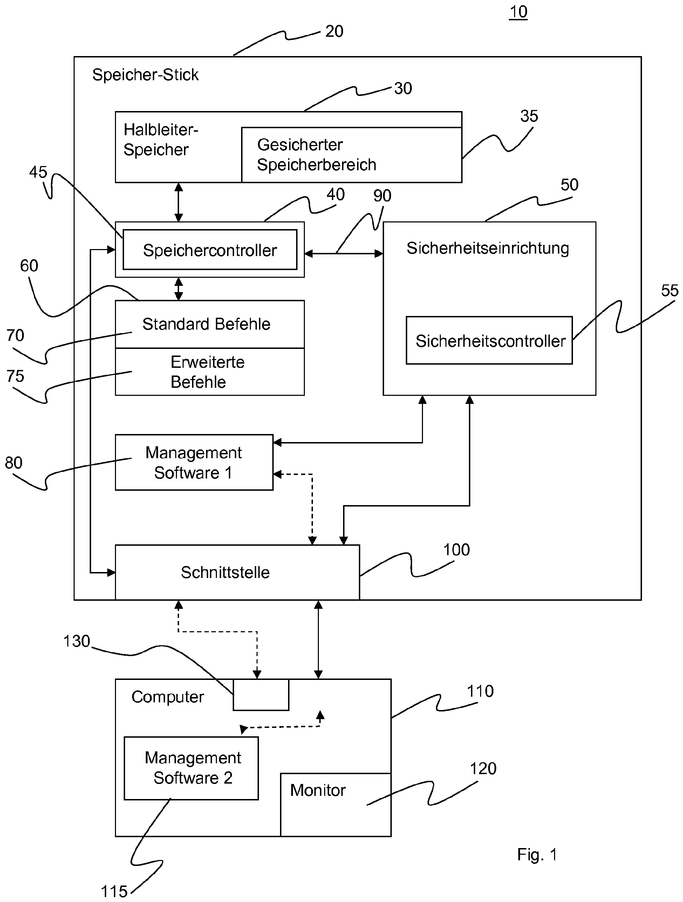

Fig. 1 zeigt ein beispielhaftes Datenspeicher- und Rechnersystem 10 in Form eines schematischen Blockschaltbildes.

Das Datenspeichersystem umfasst beispielsweise einen modifizierten Speicher-Stick 20, der auch als Memory Stick bekannt ist. Ähnlich einem herkömmlichen Speicher-Stick weist der Speicher-Stick 20 einen Festkörper-Datenspeicher 30 mit definierter Speichergröße, einen Mikroprozessor 40, in welchem ein Speichercontroller 45 implementiert sein kann, einen Programmspeicher 60, in welchem ein Standardbefehlssatz - in den Ansprüchen auch als zweiter, ungesicherter Befehlssatz bezeichnet - abgelegt sein kann, und eine Schnittstelleneinrichtung 100 auf, die im dargestellten Beispiel als USB-Schnittstelle ausgebildet ist. Bekannt ist, den Speichercontroller 45 auch außerhalb des Mikroprozessors 40 zu implementieren. Der in einem Speicherbereich 70 des Programmspeichers hinterlegte Standardbefehlssatz enthält in an sich bekannter Weise die Befehle zum Verwalten, Lesen, Schreiben und Löschen des Festkörper-Datenspeichers 30, auf die der Speichercontroller 45 nach Aufruf zugreifen kann. Der Festkörper-Datenspeicher 30 kann aus fest angeordneten Speicherelementen in Form einer Matrix aufgebaut sein, die mittels eines Spalten- und Zeilendecodierers (nicht dargestellt) in an sich bekannter Weise adressiert werden können.

Der Halbleiter- bzw. Festkörper-Datenspeicher 30 ist beispielsweise derart konfiguriert, dass ein vorbestimmter, gesicherter Speicherbereich 35 gegen einen unauthorisierten Zugriff geschützt werden kann. Je nach Konfiguration kann der vorbestimmte Speicherbereich 35 auch den Gesamtspeicherbereich des Festkörper-Datenspeichers 30 bilden. Denkbar ist auch, dass der Gesamtspeicherbereich in mehrere, vorbestimmte Teilspeicherbereiche partitioniert ist, wie dies beispielhaft in Fi. 3 gezeigt ist.

Im Speicher-Stick 20 ist neben dem Standardbefehlssatz ein erweiterter, gesicherter Befehlssatz - in den Ansprüchen auch erster, gesicherter Befehlssatz genannt - abgelegt, der vorzugsweise in einem Speicherbereich 75 des Programmspeichers 60 gespeichert ist. Der erweiterte Befehlsatz wird zur authorisierten Steuerung des vorbestimmten Speicherbereichs 35 unter Mithilfe einer Sicherheitseinrichtung 50 und des Speichercontrollers 45 benötigt. Der gesicherte Befehlssatz weist einen ersten Befehl, mit dem der vorbestimmte Speicherbereich 35 unter Kontrolle eines berechtigten Benutzers aktiviert werden kann, und einen zweiten Befehl auf, mit welchem der vorbestimmte Speicherbereich 35 unter Kontrolle des berechtigten Benutzers deaktiviert werden kann. Zweckmäßigerweise enthalten der erste und zweite Befehl jeweils Angaben über die Größe und die Adressen des vorbestimmten Speicherbereichs 35. Es sei darauf hingewiesen, dass mit Befehl eine Anweisung an den Mikroprozessor 40 gemeint ist, die dazugehörende Funktion auszuführen.

Angemerkt sei, dass die zum ersten Befehl gehörende Funktion "Aktivieren des vorbestimmten Speicherbereichs 35" dafür sorgt, dass der gesicherte Speicherbereich 35 für einen Nutzer beispielsweise auf einem Monitor 120 eines Rechners 110 sichtbar und zur Bearbeitung mittels der Standardbefehle verfügbar gemacht werden kann. Die zum zweiten Befehl gehörende Funktion "Deaktivieren des vorbestimmten Speicherbereichs 35" sorgt dafür, dass der vorbestimmte Speicherbereich 35 auf dem Monitor 120 ausgeblendet, d. h. für jeden Benutzer verborgen wird.

Der erweiterte Befehlssatz kann einen dritten Befehl enthalten, mit dessen Hilfe unter Kontrolle des berechtigten Benutzers der Festkörper-Datenspeicher 30 konfiguriert werden kann. Insbesondere kann unter Aufruf des dritten Befehls die Speicheraufteilung derart konfiguriert werden, dass, wie nachfolgend noch näher erläutert, der vorbestimmte Speicherbereich 35 unter Kontrolle des berechtigten Benutzers auf dem Monitor 120 des Computers 110 sichtbar oder unsichtbar gemacht werden kann.

Der modifizierte Speicher-Stick 20 enthält ferner eine benutzerbezogene, durch eine individuelle Kennung geschützte Sicherheitseinrichtung 50, die als Sicherheitsmodul 50 implementiert sein kann. Die Sicherheitseinrichtung 50 weist einen Sicherheitscontroller oder Sicherheits-Mikroprozessor 55 auf. Der Betrieb der Sicherheitseinrichtung 50 wird durch eine Management- oder Steuersoftware 1 gesteuert, die in der Sicherheitseinrichtung 50 oder, wie dargestellt, in einem separaten Speicher 80 hinterlegt sein kann. Zwischen der Sicherheitseinrichtung 50 und dem Mikroprozessor 40 besteht eine Kommunikationsverbindung 90, über welche der Sicherheitscontroller 55 und der Speichercontroller 45 kommunizieren können.

Die Sicherheitseinrichtung 50 ist dazu ausgebildet, unter Ansprechen auf den Empfang der individuellen Kennung den im Speicherbereich 75 hinterlegten erweiterten Befehlssatz zur Nutzung durch den Speichercontroller 45 freizugeben. Ferner kann die Sicherheitseinrichtung 50 dazu ausgebildet sein, nach Empfang und Bestätigung der individuellen Kennung eine Authentifizierung zwischen ihr und dem Speichercontroller 45 bzw. Mikroprozessor 40 durchzuführen, um eine sichere Verbindung 90 herstellen zu können. Über die sichere Verbindung 90 können dann vom Benutzer am Monitor 120 eingegebene Aufrufe zur Ausführung der Befehle des erweiterten Befehlssatzes übertragen werden.

Das Datenspeicher- und Rechnersystem 10 enthält wenigstens den einen Rechner bzw. Computer 110, der Teil des Rechnersystems ist. In dem Rechner 110 kann eine Managementsoftware 2 in einem Speicher 115 abgelegt werden. Die Managementsoftware 2 kann einen Mikroprozessor (nicht dargestellt) des Computers 110 steuern, um beispielsweise auf dem Monitor 120 eine Benutzeroberfläche zu erzeugen, mit deren Hilfe der Benutzer mit der Sicherheitseinrichtung 50 des Speicher-Sticks 20 kommunizieren kann. Zudem ist im Computer 110 eine Schnittstelleneinrichtung 130, im dargestellten Beispiel eine USB-Schnittstelle zum Anschalten des Speicher-Sticks 20 implementiert. Über die Schnittstelleneinrichtungen 100 und 130 kann der Speicherstick-Stick 20 mit dem Rechner 110 kommunizieren kann. Insbesondere können über die Schnittstelleneinrichtungen 130 und 100 sowohl die Aufrufe zur Ausführung der im Speicherbereich 70 abgelegten Standardbefehle als auch die Aufrufe zur Ausführung der Befehle des im Speicherbereich 75 gespeicherten, erweiterten Befehlssatzes übertragen werden. Angemerkt sei, dass der Speicher-Stick 20, vorzugsweise die Schnittstelleneinrichtung 100 und/oder die Sicherheitseinrichtung 50 in Verbindung mit der Management Software 1 derart ausgebildet sind, dass die Aufrufe zur Ausführung der Standardbefehle über die Schnittstelleneinrichtung 100 ohne Zwischenschaltung der Sicherheitseinrichtung 50 zum Speichercontroller 45 gelangen, während die Aufrufe zur Ausführung der Befehle des erweiterten Befehlssatzes allesamt über die Schnittstelleneinrichtung 100 und die Sicherheitseinrichtung 50 dem Speichercontroller 45 übergeben werden.

An dieser Stelle sei darauf hingewiesen, dass es sich bei den Schnittstellen 100 und 130 auch um drahtlose Schnittstellen, wie z. B. Bluetooth-Schnittstellen oder WLAN-Schnittstellen handeln kann, über die der Speicher-Stick 20 und der Computer 110 kommunizieren können.

Denkbar ist, dass die Komponenten des Speicher-Sticks 20 in dem Computer 110 implementiert sind. In diesem Fall kann es sich beim Festkörper-Speicher 30 um ein sogenanntes Solid State Drive handeln. Nicht benötigt werden bei dieser Ausführungsform die Schnittstelleneinrichtungen 100 und 130.

Nachfolgend wird die Funktionsweise des in Fig. 1 gezeigten Datenspeicher- und Rechnersystems 10 näher erläutert.

Angenommen sei zunächst, dass der Festkörper-Datenspeicher 30 wie zuvor erläutert derart konfiguriert worden ist, dass der vorbestimmte Speicherbereich 35 nur für einen authorisierten Benutzer zur Verfügung steht und aktuell deaktiviert ist. Das bedeutet, dass der Speicher-Stick 20, nachdem er mit dem Computer 110 verbunden worden ist, zwar von diesem erkannt werden kann, der Speicherbereich 35 aber verborgen ist. Ein Benutzer des Speicher-Sticks 20 findet somit keine Anzeichen dafür, dass ein verborgener Speicherbereich überhaupt existiert. Lediglich der verbleibende Speicherbereich des Festkörper-Speichers 30 kann am Monitor 120 dargestellt werden.

Der Benutzer des Speicher-Sticks 20 möchte nunmehr auf den verborgenen Speicherbereich 35 zugreifen. Der Nutzer aktiviert hierzu zum Beispiel die Management Software 2, die den Nutzer anschließend am Monitor 120 auffordert, die individuelle Kennung der Sicherheitseinrichtung 50 einzugeben. Die am Computer 110 über eine Eingabeeinrichtung - das kann der Monitor 120 oder eine Tatstatur sein - eingegebene individuelle Kennung wird dann unter Steuerung der Management Software 2 über die Schnittstelle 130 und die Schnittstelle 100 der Sicherheitseinrichtung 50 zugeführt. Die Sicherheitseinrichtung 50 prüft in an sich bekannter Weise die eingegebene individuelle Kennung auf Richtigkeit und Gültigkeit. Wird die eingegebene individuelle Kennung von der Sicherheitseinrichtung 50 akzeptiert, gibt die Sicherheitseinrichtung 50 bzw. der Sicherheitskontroller 55 den im Speicherbereich 75 hinterlegten gesicherten Befehlssatz zur Nutzung durch den Speichercontroller 45 frei.

Unter Ansprechen auf die empfangene und akzeptierte individuelle Kennung kann die Sicherheitseinrichtung 50, unter Zuhilfenahme der Management Software 1 dafür sorgen, dass eine Authentifizierung zwischen dem Mikroprozessor 40 bzw. dem Speichercontroller 45 und der Sicherheitseinrichtung 50 durchgeführt wird. Nach einer erfolgreichen Authentifizierung kann zwischen der Sicherheitseinrichtung 50 bzw. dem Sicherheitscontroller 55 und dem Speichercontroller 45 eine sichere Verbindung 90 zum Beispiel in Form eines Tunnels aufgebaut werden.

Die Sicherheitseinrichtung 50 kann ferner dazu ausgebildet sein, den Computer 110 über die Freigabe des erweiterten Befehlssatzes informieren. Unter Ansprechen auf die Freigabe kann die Managementsoftware 2 den Computer 110 veranlassen, eine Benutzeroberfläche auf dem Monitor 120 zu erzeugen, über die der Benutzer nunmehr den gesicherten Speicherbereich 35 autorisiert ansprechen kann.

Der Benutzer gibt nunmehr an der Benutzeroberfläche am Computer 110 den Aufruf "Aktivieren des Speicherbereichs" ein. Der Aufruf gelangt über die Schnittstelleneinrichtung 130 und unter Steuerung der Management Software 1 über die Schnittstelleneinrichtung 100 zum Sicherheitscontroller 55.

Der empfangene Aufruf "Aktivieren des vorbestimmten Speicherbereichs" wird unter Steuerung des Management Software 1 vom Sicherheitscontroller 55 der Sicherheitseinrichtung 50 über die sichere Verbindung 90 zum Speichercontroller 45 übertragen. Unter Ansprechen auf den empfangenen Aufruf liest der Speichercontroller 45 den ersten Befehl des im Speicherbereich 75 hinterlegten Befehlssatzes aus und veranlasst den Mikroprozessor 40, die Funktion "Aktivierung des Speicherbereichs 35" auszuführen.

Nunmehr kann der Speicherbereich 35 auf dem Monitor 120 des Computers 110 sichtbar gemacht werden. Ab diesem Zeitpunkt kann der Benutzer in herkömmlicher Weise den Inhalt des Speicherbereichs 35 bearbeiten.

Beispielsweise kann der Benutzer am Computer 110 einen Aufruf zum Auslesen des Speicherbereichs 35 eingeben, der über die Schnittstelleneinrichtungen 130 und 100 ohne Zwischenschaltung der Sicherheitseinrichtung 50 dem Speichercontroller 45 übergeben wird. Unter Ansprechen auf den Leseaufruf liest der Speichercontroller 45 den Lesebefehl aus dem Speicherbereich 70 des Programmspeichers 60 aus und sorgt dafür, dass die im Speicher 35 hinterlegten Daten auf dem Monitor 120 erscheinen. Nunmehr kann der Benutzer neue Daten, die in den Speicherbereich 35 geschrieben werden sollen, am Computer 110 eingeben und zusammen mit einem Schreibaufruf zurück zum Speichercontroller 45 schicken. In herkömmlicher Weise sorgt der Speichercontroller 45 dafür, dass die neuen Daten in den Speicherbereich 35 geschrieben werden. Zum Schluss möchte der Benutzer den Speicherbereich 35 wieder verbergen, so das Unbefugte keinen Zugang zum Speicherinhalt des Speicherbereichs 35 erhalten. Demzufolge gibt der Benutzer an der auf dem Monitor 120 dargestellten Benutzeroberfläche den Aufruf "Deaktivierung des Speicherbereichs" ein, der wiederum über die Schnittstelleneinrichtung 130 und unter Steuerung der Management Software 1 über die Schnittstelleneinrichtung 100 der Sicherheitseinrichtung 50 übergeben wird. Die Sicherheitseinrichtung 50 sorgt dann dafür, dass der Aufruf "Deaktivierung des Speicherbereichs" über die sichere Verbindung 90 zum Speichercontroller 45 übertragen wird. Der Speichercontroller 45 liest den dazugehörenden zweiten Befehl zur Deaktivierung des Speicherbereichs 35 aus dem Speicherbereich 75 des Programmspeichers 60 aus und veranlasst den Mikroprozessor 40, den Speicherbereich 35 zu deaktivieren, sodass der Speicherbereich 35 am Monitor 120 wieder ausgeblendet wird. Für einen Nutzer existiert dann kein Hinweis auf einen verborgenen Speicherbereich 35 mehr. Auf diese Weise wird sichergestellt, dass ein Unbefugter, der den Speicher-Stick 20 verwendet, lediglich den nicht gesicherten Speicherbereich des Festkörper-Datenspeichers 30 ansehen und bearbeiten kann.

Angemerkt sei an dieser Stelle, dass in der Sicherheitseinrichtung 50 mehrere, zum Beispiel vier individuelle Kennungen verschiedener Nutzer gespeichert sein können, über welche die verschiedenen Nutzer in der zuvor beschriebenen Art und Weise authorisierten Zugriff auf den gesicherten Speicherbereich 35 erhalten können.

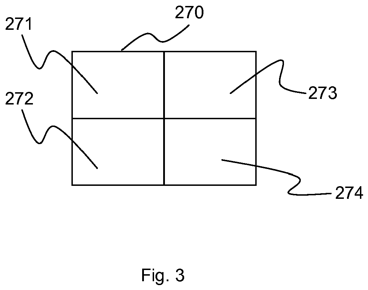

Denkbar ist zudem, dass der Gesamtspeicher des Festkörper-Datenspeichers 30 in mehrere, zum Beispiel vier vorbestimmte gesicherte Teilspeicherbereiche 271 bis 274 unterteilt ist, wie in Fig. 3 gezeigt. Jedem Teilspeicherbereich kann eine der individuellen Kennungen, welche in der Sicherheitseinrichtung 50 gespeichert sind, zugeordnet werden. Die Zuordnung zwischen Teilspeicherbereich und individueller Kennung kann dadurch hergestellt werden, dass im Speicherbereich 75 des Programmspeichers 60 für jede individuelle Kennung ein individueller erweiterter Befehlssatz abgelegt wird, dessen Befehle den dazugehörenden Teilspeicherbereich genau definieren. Auf diese Weise ist sichergestellt, dass ein Nutzer, welchem beispielsweise der Teilspeicherbereich 271 zugeordnet worden ist, durch Eingabe seiner individuellen Kennung am Monitor 120 und nach Aufruf des Aktivierungs- oder Deaktivierungsbefehls des ihm zugeordneten erweiterten Befehlssatzes in der zuvor beschriebenen Art und Weise gezielt den Teilspeicherbereich 271 sichtbar oder unsichtbar machen kann.

Wiederum ist sicherzustellen, dass die zur Steuerung der Teilspeicherbereiche 271 bis 274 definierten Aufrufe zur Ausführung des jeweiligen Aktivierungs- oder Deaktivierungsbefehls, welche am Computer 110 eingegeben werden können, nur über die Sicherheitseinrichtung 50 dem Speichercontroller 45 übergeben werden. Alle übrigen, im Speicherbereich 70 abgelegten Standardbefehle werden vom Speichercontroller 45 ohne Einbeziehung der Sicherheitseinrichtung 50 ausgeführt.

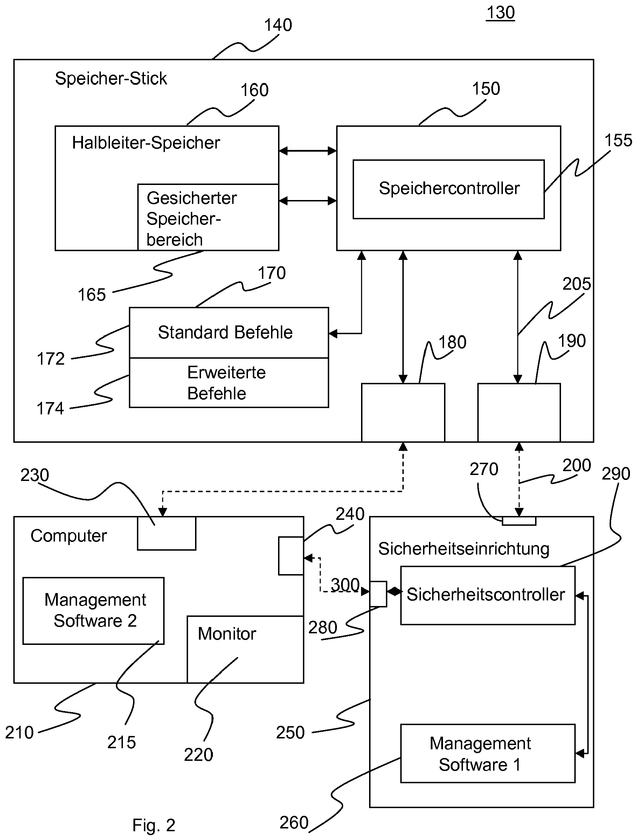

Fig. 2 zeigt ein alternatives beispielhaftes Datenspeicher- und Rechnersystem 130.

Der wesentliche Unterschied zu dem in Fig. 1 gezeigten Datenspeicher- und Rechnersystem 10 besteht darin, dass eine Sicherheitseinrichtung 250 als separate Baugruppe getrennt von einem Speichercontroller 155 bzw. außerhalb eines Speicher-Sticks 140 angeordnet ist.

Ähnlich dem Speicher-Stick 20 weist der Speicher-Stick 140 einen Festkörper-Datenspeicher 160 mit definierter Speichergröße, einen Mikroprozessor 150, in welchem ein Speichercontroller 155 implementiert sein kann, einen Programmspeicher 170, in welchem ein Standardbefehlssatz - in den Ansprüchen auch als zweiter, ungesicherter Befehlssatz bezeichnet - abgelegt sein kann, und eine Schnittstelleneinrichtung 180 auf, die im dargestellten Beispiel als USB-Schnittstelle ausgebildet ist. Eine weitere Schnittstelle 190 ist vorgesehen, über die eine Kommunikationsverbindung 200 zwischen der Sicherheitseinrichtung 250 und dem Speicher-Stick 140 bzw. dem Speichercontroller 155 hergestellt werden kann. Zu diesem Zweck verfügt die Sicherheitseinrichtung 250 ebenfalls über eine Schnittstelle 270. Bei den Schnittstellen 190 und 270 kann es sich um beliebige Standard-Schnittstellen, beispielsweise um Bluetooth-Schnittstellen handeln. In dem beispielhaften Fall wird zwischen den Schnittstellen 190 und 270 eine drahtlose Kommunikationsverbindung 200 aufgebaut.

Bekannt ist, den Speichercontroller 155 auch außerhalb des Mikroprozessors 150 zu implementieren. Der in einem Speicherbereich 172 des Programmspeichers hinterlegte Standardbefehlssatz enthält in an sich bekannter Weise die Befehle zum Verwalten, Lesen, Schreiben und Löschen des Festkörper-Datenspeichers 160, auf die der Speichercontroller 155 nach Aufruf zugreifen kann. Der Festkörper-Datenspeicher 160 kann aus fest angeordneten Speicherelementen in Form einer Matrix aufgebaut sein, die mittels eines Spalten- und Zeilendecodierers (nicht dargestellt) in an sich bekannter Weise adressiert werden können.

Der Halbleiter- bzw. Festkörper-Datenspeicher 160 ist beispielsweise derart konfiguriert, dass ein vorbestimmter, gesicherter Speicherbereich 165 gegen einen unauthorisierten Zugriff geschützt werden kann. Je nach Konfiguration kann der vorbestimmte Speicherbereich 165 auch den Gesamtspeicherbereich des Festkörper-Datenspeichers 160 bilden. Denkbar ist auch, dass der Gesamtspeicherbereich in mehrere, vorbestimmte Teilspeicherbereiche partitioniert ist, wie dies beispielhaft in Fi. 3 gezeigt ist.

Im Speicher-Stick 140 ist neben dem Standardbefehlssatz ein erweiterter, gesicherter Befehlssatz abgelegt, der vorzugsweise in einem Speicherbereich 174 des Programmspeichers 170 gespeichert ist. Der erweiterte Befehlsatz wird zur authorisierten Steuerung des vorbestimmten Speicherbereichs 165 unter Mithilfe einer Sicherheitseinrichtung 250 und des Speichercontrollers 155 benötigt. Der gesicherte Befehlssatz weist einen ersten Befehl, mit dem der vorbestimmte Speicherbereich 165 unter Kontrolle eines berechtigten Benutzers aktiviert werden kann, und einen zweiten Befehl auf, mit welchem der vorbestimmte Speicherbereich 165 unter Kontrolle des berechtigten Benutzers deaktiviert werden kann. Zweckmäßigerweise enthält der erste und zweite Befehl Angaben über die Größe und die Adressen des vorbestimmten Speicherbereichs 165. Es sei darauf hingewiesen, dass mit Befehl eine Anweisung an den Mikroprozessor 150 gemeint ist, die dazugehörende Funktion auszuführen.

Angemerkt sei an dieser Stelle, dass die zum ersten Befehl gehörende Funktion "Aktivieren des vorbestimmten Speicherbereichs" dafür sorgt, dass der gesicherte Speicherbereich 165 für einen Nutzer beispielsweise auf einem Monitor 220 eines Rechners 210 sichtbar und zur Bearbeitung mittels der Standardbefehle verfügbar gemacht werden kann. Die zum zweiten Befehl gehörende Funktion "Deaktivieren des vorbestimmten Speicherbereichs" sorgt dafür, dass der vorbestimmte Speicherbereich 165 auf dem Monitor 220 vollständig ausgeblendet, d. h. für jeden Benutzer verborgen wird.

Der erweiterte Befehlssatz kann einen dritten Befehl enthalten, mit dessen Hilfe unter Kontrolle des berechtigten Benutzers der Festkörper-Datenspeicher 30 konfiguriert werden kann. Insbesondere kann unter Aufruf des dritten Befehls die Speicheraufteilung derart konfiguriert werden, dass, wie nachfolgend noch näher erläutert, der vorbestimmte Speicherbereich 165 unter Kontrolle des berechtigten Benutzers auf dem Monitor 220 des Computers 210 sichtbar oder unsichtbar gemacht werden kann.

Die außerhalb des Speicher-Stick 140 angeordnete Sicherheitseinrichtung 250 kann ein benutzerbezogenes, durch eine individuelle Kennung geschütztes Sicherheitsmodul oder eine Chipkarte sein. Die Sicherheitseinrichtung 150 weist einen Sicherheitscontroller oder Sicherheits-Mikroprozessor 155 auf. Der Betrieb der Sicherheitseinrichtung 150 wird durch eine Management- oder Steuersoftware 1 gesteuert, die in einem Speicher 260 hinterlegt sein kann. Zwischen der Sicherheitseinrichtung 250 und dem Mikroprozessor 150 kann eine Kommunikationsverbindung 205, 200 hergestellt werden, die über die drahtlose Strecke 200 zwischen den Schnittstellen 270 und 190 und der Verbindung 205 zwischen der Schnittstelle 190 und dem Mikroprozessor 150 bzw. dem Speichercontroller 155 verläuft.

Die Sicherheitseinrichtung 250 ist dazu ausgebildet, unter Ansprechen auf den Empfang der individuellen Kennung den im Speicherbereich 174 hinterlegten erweiterten Befehlssatz zur Nutzung durch den Speichercontroller 155 freizugeben. Ferner kann die Sicherheitseinrichtung 250 dazu ausgebildet sein, nach Empfang und Bestätigung der individuellen Kennung eine Authentifizierung zwischen ihr und dem Speichercontroller 155 bzw. Mikroprozessor 150 durchzuführen, um eine sichere Verbindung 200, 205 herstellen zu können. Über die sichere Verbindung 200, 205 können dann vom Benutzer am Monitor 220 eingegebene Aufrufe zur Ausführung der Befehle des erweiterten Befehlssatzes übertragen werden. Die Aufrufe werden zunächst über eine Schnittstelle 240 des Computers 210 und über die Kommunikationsverbindung 300 zu einer Schnittstelle 280 der Sicherheitseinrichtung 250 übertragen und dann über die Schnittstelle 270 weitergeleitet. Die Schnittstellen 240 und 280 können wiederum beliebige Standard-Schnittstellen, zum Beispiel Bluetooth-Schnittstellen oder USB-Schnittstellen sein.

Das Datenspeicher- und Rechnersystem 10 enthält wenigstens den einen Rechner bzw. Computer 210, der Teil des Rechnersystems ist. In dem Rechner 210 kann eine Managementsoftware 2 in einem Speicher 215 abgelegt werden. Die Managementsoftware 2 kann einen Mikroprozessor (nicht dargestellt) des Computers 210 steuern, um beispielsweise auf dem Monitor 220 eine Benutzeroberfläche zu erzeugen, mit deren Hilfe der Benutzer mit der Sicherheitseinrichtung 250 kommunizieren kann. Der beispielhafte Computer 210 verfügt über eine weitere Schnittstelle 230, die als USB-Schnittstelle ausgebildet sein kann. Über die Schnittstelle 230 und die Schnittstelle 180 des Speicher-Sticks 140 können vom Benutzer am Computer 210 eingegebene Aufrufe zur Ausführung von Standardbefehlen zum Speichercontroller 155 übertragen werden. Wie bereits erläutert, werden die vom Benutzer am Computer 210 eingegebenen Aufrufe zur Ausführung von Befehlen des erweiterten Befehlssatzes über die Verbindungen 300, die Sicherheitseinrichtung 250 und die Verbindungen 200 und 205 zum Speichercontroller 155 des Speicher-Sticks 140 übertragen.

Angemerkt sei, dass die Sicherheitseinrichtung 250 der Computer 210 und der Speicher-Stick 140 auch in unterschiedlichen Räumen getrennt voneinander angeordnet sein können. In diesem Fall kommunizieren die drei Komponenten vorzugsweise über drahtlose Schnittstellen miteinander.

Nachfolgend wird die Funktionsweise des in Fig. 2 gezeigten Datenspeicher- und Rechnersystems 130 näher erläutert, die im Wesentlich der Funktionsweise des Datenspeicher- und Rechnersystems 10 entspricht.

Angenommen sei wiederum, dass der Festkörper-Datenspeicher 160 derart konfiguriert worden ist, dass der vorbestimmte Speicherbereich 165 nur für einen authorisierten Benutzer zur Verfügung steht und aktuell deaktiviert ist. Das bedeutet, dass der Speicher-Stick 140, nachdem er mit dem Computer 210 verbunden worden ist, zwar von diesem erkannt werden kann, der Speicherbereich 165 aber verborgen ist. Ein Benutzer des Speicher-Sticks 140 findet somit keine Anzeichen dafür, dass ein verborgener Speicherbereich überhaupt existiert. Lediglich der verbleibende Speicherbereich des Festkörper-Speichers 160 kann am Monitor 220 dargestellt werden.

Der Benutzer des Speicher-Sticks 140 möchte nunmehr auf den verborgenen Speicherbereich 35 zugreifen. Der Nutzer aktiviert hierzu zum Beispiel die Management Software 2, die den Nutzer anschließend am Monitor 220 auffordert, die individuelle Kennung der Sicherheitseinrichtung 250 einzugeben. Die am Computer 210 über eine Eingabeeinrichtung - das kann der Monitor 220 oder eine Tatstatur sein - eingegebene individuelle Kennung wird dann unter Steuerung der Management Software 2 über die Schnittstelle 240 und die Schnittstelle 280 der Sicherheitseinrichtung 250 zuführte. Die Sicherheitseinrichtung 250 prüft in an sich bekannter Weise die eingegebene individuelle Kennung auf Richtigkeit und Gültigkeit. Wird die eingegebene individuelle Kennung von der Sicherheitseinrichtung 250 akzeptiert, gibt die Sicherheitseinrichtung 250 bzw. der Sicherheitskontroller 290 den im Speicherbereich 174 hinterlegten gesicherten Befehlssatz zur Nutzung durch den Speichercontroller 155 frei.

Unter Ansprechen auf die empfangene und akzeptierte individuelle Kennung kann die Sicherheitseinrichtung 250, unter Zuhilfenahme der Management Software 1 dafür sorgen, dass eine Authentifizierung zwischen dem Mikroprozessor 150 bzw. dem Speichercontroller 155 und der Sicherheitseinrichtung 250 durchgeführt wird. Nach einer erfolgreichen Authentifizierung kann zwischen der Sicherheitseinrichtung 250 bzw. dem Sicherheitscontroller 290 und dem Speichercontroller 155 eine sichere Verbindung 200, 205 aufgebaut werden.

Die Sicherheitseinrichtung 250 kann ferner dazu ausgebildet sein, den Computer 210 über die Freigabe des erweiterten Befehlssatzes informieren. Unter Ansprechen auf die Freigabe kann die Managementsoftware 2 den Computer 210 veranlassen, eine Benutzeroberfläche auf dem Monitor 220 zu erzeugen, über die der Benutzer nunmehr den gesicherten Speicherbereich 165 autorisiert ansprechen kann.

Der Benutzer gibt nunmehr an der Benutzeroberfläche am Computer 210 den Aufruf "Aktivieren des Speicherbereichs" ein. Der Aufruf gelangt über die Schnittstelleneinrichtung 240 und unter Steuerung der Management Software 1 über die Schnittstelleneinrichtung 280 zum Sicherheitscontroller 290.

Der empfangene Aufruf "Aktivieren des vorbestimmten Speicherbereichs" wird unter Steuerung des Management Software 1 vom Sicherheitscontroller 290 der Sicherheitseinrichtung 250 über die sichere Verbindung 200, 205 zum Speichercontroller 155 übertragen. Unter Ansprechen auf den empfangenen Aufruf liest der Speichercontroller 155 den ersten Befehl des im Speicherbereich 174 hinterlegten Befehlssatzes aus und veranlasst den Mikroprozessor 150, die Funktion "Aktivierung des Speicherbereichs" auszuführen.

Nunmehr kann der Speicherbereich 165 auf dem Monitor 220 des Computers 210 sichtbar gemacht werden. Ab diesem Zeitpunkt kann der Benutzer in herkömmlicher Weise den Inhalt des Speicherbereichs 165 bearbeiten.

Beispielsweise kann der Benutzer am Computer 210 einen Aufruf zum Auslesen des Speicherbereichs 165 eingeben, der über die Schnittstelleneinrichtungen 230 und 180 ohne Zwischenschaltung der Sicherheitseinrichtung 250 dem Speichercontroller 155 übergeben wird. Unter Ansprechen auf den Leseaufruf liest der Speichercontroller 155 den Lesebefehl aus dem Speicherbereich 172 des Programmspeichers 170 aus und sorgt dafür, dass die im Speicher 165 hinterlegten Daten auf dem Monitor 220 erscheinen. Nunmehr kann der Benutzer diese Daten löschen, indem er am Computer 210 einen Löschaufruf eingibt, der ohne Zwischenschaltung der Sicherheitseinrichtung 250 zum Speichercontroller 155 gelangt. In herkömmlicher Weise sorgt der Speichercontroller 155 dafür, dass die Daten des Speicherbereichs 165 gelöscht werden. Zum Schluss möchte der Benutzer den Speicherbereich 35 wieder verbergen, so das Unbefugte keinen Zugang zum Speicherinhalt des Speicherbereichs 165 erhalten. Demzufolge gibt der Benutzer an der auf dem Monitor 220 dargestellten Benutzeroberfläche den Aufruf "Deaktivierung des Speicherbereichs" ein, der wiederum unter Steuerung der Management Software 2 über die Verbindung 300 der Sicherheitseinrichtung 250 übergeben wird. Die Sicherheitseinrichtung 250 sorgt dann dafür, dass der Aufruf "Deaktivierung des Speicherbereichs" über die sichere Verbindung 200, 205 zum Speichercontroller 155 übertragen wird. Der Speichercontroller 155 liest den dazugehörenden zweiten Befehl zur Deaktivierung des Speicherbereichs 165 aus dem Speicherbereich 174 des Programmspeichers 170 aus und veranlasst den Mikroprozessor 150, den Speicherbereich 165 zu deaktivieren, sodass der Speicherbereich 165 am Monitor 220 wieder ausgeblendet wird. Für einen Nutzer existiert dann kein Hinweis auf einen verborgenen Speicherbereich 165 mehr.

Angemerkt sei an dieser Stelle, dass mehrere Sicherheitseinrichtungen, die in Aufbau und Funktion der Sicherheitseinrichtung 250 ähneln, und in denen jeweils eine individuelle Kennung gespeichert ist, innerhalb des Datenspeicher- und Rechnersystems 140 verwendet werden können. Mittels dieser Sicherheitseinrichtungen können verschiedene Nutzer in der zuvor beschriebenen Art und Weise authorisierten Zugriff auf den gesicherten Speicherbereich 165 erhalten.

Denkbar ist zudem, dass der Gesamtspeicher des Festkörper-Datenspeichers 160 in mehrere, zum Beispiel vier vorbestimmte gesicherte Teilspeicherbereiche 271 bis 274 unterteilt ist, wie in Fig. 3 gezeigt. Jedem Teilspeicherbereich kann eine Sicherheitseinrichtung mit individueller Kennung zugeordnet werden. Die Zuordnung zwischen Teilspeicherbereich und Sicherheitseinrichtung bzw. individueller Kennung kann dadurch hergestellt werden, dass im Speicherbereich 174 des Programmspeichers 170 für jede individuelle Kennung ein individueller erweiterter Befehlssatz abgelegt wird, dessen Befehle den dazugehörenden Teilspeicherbereich genau definieren. Auf diese Weise ist sichergestellt, dass ein Nutzer, welchem beispielsweise der Teilspeicherbereich 271 zugeordnet worden ist, durch Eingabe seiner individuellen Kennung am Monitor 220 und nach Aufruf des Aktivierungs- oder Deaktivierungsbefehls des ihm zugeordneten erweiterten Befehlssatzes in der zuvor beschriebenen Art und Weise gezielt den Teilspeicherbereich 271 sichtbar oder unsichtbar machen kann. Er muss lediglich dafür sorgen, dass seine Sicherheitseinrichtung mit dem Computer 210 und dem Speicher-Stick 140 verbunden ist.

Wiederum ist sicherzustellen, dass die zur Steuerung der Teilspeicherbereiche 271 bis 274 definierten Aufrufe zur Ausführung des jeweiligen Aktivierungs- oder Deaktivierungsbefehls, welche am Computer 210 eingegeben werden können, nur über die Sicherheitseinrichtung 50 dem Speichercontroller 155 übergeben werden. Alle übrigen im Speicherbereich 70 abgelegten Standardbefehle werden vom Speichercontroller 155 ohne Einbeziehung der Sicherheitseinrichtung 50 ausgeführt.

## Patentansprüche

1. Verfahren zum Schutz wenigstens eines vorbestimmten Speicherbereichs (35; 165) eines Festkörper-Datenspeichers (30; 60) gegen unauthorisierten Zugriff, mit folgenden Verfahrensschritten:
Speichern eines ersten, gesicherten Befehlssatzes für einen Speichercontroller (45; 155) zur Steuerung des Festkörper-Datenspeichers (30; 60), wobei der erste Befehlssatz einen ersten Befehl zum Aktivieren eines vorbestimmten Speicherbereichs (35; 165) und einen zweiten Befehl zum Deaktivieren des vorbestimmten Speicherbereichs (35; 165) enthält;
Eingeben an einer Eingabeeinrichtung (110; 210) einer individuellen Kennung für eine benutzerbezogene, durch eine individuelle Kennung geschützte Sicherheitseinrichtung (50; 250);
unter Ansprechen auf die individuelle Kennung Freigeben des ersten, gesicherten Befehlssatz zur Nutzung durch den Speichercontroller (45; 155) unter Steuerung der benutzerbezogenen Sicherheitseinrichtung (50; 250), wobei der vorbestimmte Speicherbereich (35; 165), sofern er unter Steuerung des Speichercontrollers (45; 155) aktiviert worden ist, auf einer Anzeigeeinrichtung (120; 220) sichtbar gemacht und unter Verwendung eines zweiten, ungesicherten Befehlssatzes unter Steuerung des Speichercontrollers (45; 155) bearbeitet werden kann, und wobei der vorbestimmte Speicherbereich, sofern er unter Steuerung des Speichercontrollers (45; 155) deaktiviert worden ist, ausgeblendet wird.

2. Verfahren nach Anspruch 1,
**dadurch gekennzeichnet, dass**
der erste Befehlssatz einen dritten Befehl zum Konfigurieren des Gesamtspeicherbereichs des Festkörper-Datenspeichers (30; 160) enthält.

3. Verfahren nach Anspruch 1 oder 2,
**dadurch gekennzeichnet, dass**
Aufrufe zur Ausführung der Befehle des freigegebenen ersten Befehlssatzes nur von der Sicherheitseinrichtung (50; 250) dem Speichercontroller (45; 155) übergeben werden.

4. Verfahren nach Anspruch 3,
**dadurch gekennzeichnet, dass**
nach Eingabe der individuellen Kennung eine Authentifizierung zwischen der Sicherheitseinrichtung (50; 250) und dem Speichercontroller (45; 155) zur Herstellung einer sicheren Verbindung (90; 200, 205) durchgeführt wird, und dass
die Aufrufe zur Ausführung der Befehle des freigegebenen ersten Befehlssatzes über die sichere Verbindung zum Speichercontroller (45; 155) übertragen werden.

5. Verfahren nach einem der vorstehenden Ansprüche,
**dadurch gekennzeichnet, dass**
unter Steuerung der Sicherheitseinrichtung (50; 250) eine Benutzerschnittstelle zur Eingabe der Aufrufe zur Ausführung der Befehle des freigegebenen ersten Befehlssatzes erzeugt wird.

6. Verfahren nach einem der vorstehenden Ansprüche,
**dadurch gekennzeichnet, dass**
dem vorbestimmten Speicherbereich (35; 165) mehrere individuelle Kennungen zugeordnet werden, oder mehreren separaten vorbestimmten Speicherbereichen (271-274) des Festkörper-Datenspeichers (30; 160) jeweils eine individuelle Kennung zugeordnet wird, wobei für jede individuelle Kennung ein individueller erster Befehlssatz gespeichert wird, und dass nach Eingabe einer der individuellen Kennungen der dazugehörende individuelle erste Befehlssatz freigegeben wird.

7. Datenspeichersystem zum Schutz wenigstens eines vorbestimmten Speicherbereichs (35; 165) eines Festkörper-Datenspeichers (30; 160) gegen unauthorisierten Zugriff, aufweisend einen Festkörper-Datenspeicher (30; 160) mit einem vordefinierten Speicherbereich (35; 165),
einen Speichercontroller (45; 155),
eine Speichereinrichtung (60, 75; 170, 174), in welcher ein erster, gesicherter Befehlssatz abgelegt ist, wobei der erste Befehlssatz einen ersten Befehl zum Aktivieren des vorbestimmten Speicherbereichs (35; 165) und einen zweiten Befehl zum Deaktivieren des vorbestimmten Speicherbereichs (35; 165) enthält, eine benutzerbezogene, durch eine individuelle Kennung geschützte Sicherheitseinrichtung (50; 250), die dazu ausgebildet ist, unter Ansprechen auf den Empfang einer individuellen Kennung den ersten Befehlsatzes zur Nutzung durch den Speichercontroller (45; 155) freizugeben,
wobei der Speichercontroller (45; 155) dazu ausgebildet ist,
- unter Ansprechen auf den ersten Befehl zu veranlassen, dass der vorbestimmte Speicherbereich (35; 165) auf einer Anzeigeeinrichtung (120; 220) sichtbar ist,
- unter Verwendung eines zweiten, ungesicherten Befehlssatzes den angezeigten, vorbestimmten Speicherbereich (35; 165) zu bearbeiten, und
- unter Ansprechen auf den zweiten Befehl zu veranlassen, dass der vorbestimmte Speicherbereich (35; 165) ausgeblendet wird.

8. Datenspeichersystem nach Anspruch 7,
**dadurch gekennzeichnet, dass**
die Sicherheitseinrichtung (50; 250) dazu ausgebildet ist, Aufrufe zur Ausführung der Befehl des freigegebenen ersten Befehlssatzes über eine drahtgebundene oder drahtlose Verbindung (90; 200, 205) zum Speichercontroller (45; 155) zu übertragen.

9. Datenspeichersystem nach Anspruch 8,
**dadurch gekennzeichnet, dass**
die Sicherheitseinrichtung (50; 250) dazu ausgebildet ist, eine Authentifizierung zwischen der Sicherheitseinrichtung (50; 250) und dem Speichercontroller (45; 155) zur Herstellung einer sicheren drahtgebundenen oder sicheren drahtlosen Verbindung (90; 200, 205) zu steuern, so dass die Aufrufe zur Ausführung der Befehle des ersten Befehlssatzes über die sichere Verbindung übertragbar sind.

10. Datenspeichersystem nach einem der Ansprüche 7 bis 9,
**dadurch gekennzeichnet, dass**
der Festkörper-Datenspeicher (30), der Speichercontroller (45) und die Sicherheitseinrichtung (50) in einem Wechseldatenträger (20), insbesondere in einem Speicher-Stick implementiert sind, der eine Schnittstelleneinrichtung (100) zur Kommunikation mit einer Rechnereinrichtung (110) aufweist.

11. Datenspeichersystem nach einem der Ansprüche 7 bis 9,
**dadurch gekennzeichnet, dass**
der Festkörper-Datenspeicher (160) und die Sicherheitseinrichtung (250) in getrennten Gehäusen angeordnet sind, und dass
der Festkörper-Datenspeicher (160) eine Schnittstelleneinrichtung zur Kommunikation mit einer Recheneinrichtung (210) und der Sicherheitseinrichtung (250) aufweist.

12. Datenspeichersystem nach Anspruch 11,
**dadurch gekennzeichnet, dass**
der Festkörper-Datenspeicher (160) Teil eines Wechseldatenträgers (140), insbesondere eines Speicher-Sticks ist.

13. Datenspeichersystem nach Anspruch 10, 11 oder 12,
**dadurch gekennzeichnet, dass**
die Recheneinrichtung (110; 210) dazu ausgebildet ist, eine Benutzerschnittstelle bereitzustellen, die dazu ausgebildet ist, eine Kommunikation eines Benutzers mit der Sicherheitseinrichtung zu ermöglichen.

14. Datenspeichersystem nach einem der Ansprüche 7 bis 13,
**dadurch gekennzeichnet, dass**
die Sicherheitseinrichtung (50; 250) ein Sicherheitsmodul oder eine Chipkarte ist.

15. Datenspeichersystem nach einem der Ansprüche 7 bis 14,
**dadurch gekennzeichnet, dass**
der Festkörper-Datenspeicher (30; 160) mehrere vorbestimmte Speicherbereiche (271-274) enthält, denen jeweils eine separate, benutzerbezogene und durch eine individuelle Kennung geschützte Sicherheitseinrichtung zugeordnet ist, dass
in der Speichereinrichtung (60, 75; 170, 174) für jede Sicherheitseinrichtung ein individueller erste Befehlssatz gespeichert ist, und dass
jede benutzerbezogene Sicherheitseinrichtung dazu ausgebildet ist, unter Ansprechen auf den Empfang der jeweiligen individuellen Kennung den ihr zugeordneten ersten Befehlsatzes zur Nutzung durch den Speichercontroller (45; 155) freizugeben.

## Claims

1. A method for protecting at least one predetermined memory area (35; 165) of a solid state data memory (30; 60) against unauthorized access, comprising the method steps of:
storing a first, secure instruction set for a memory controller (45; 155) for controlling the solid state data memory (30; 60), said first instruction set including a first instruction for enabling a predetermined memory area (35; 165) and a second instruction for disabling the predetermined memory area (35; 165);
entering, at an input device (110; 210), an individual identifier for a user-related security device (50; 250) that is protected by an individual identifier;
in response to the individual identifier, releasing the first, secure instruction set for use by the memory controller (45; 155) under control of the user-related security device (50; 250), wherein the predetermined memory area (35; 165) is visualized on a display device (120; 220) if it has been enabled under the control of the memory controller (45; 155), and can be edited using a second, non-secure instruction set under the control of the memory controller (45; 155); and wherein the predetermined memory area is hidden, if it has been disabled under the control of the memory controller (45; 155).

2. The method according to claim 1, **characterized in that** the first instruction set includes a third instruction for configuring the total memory area of the solid state data memory (30; 160).

3. The method according to claim 1 or 2,
**characterized in that**
requests for executing the instructions of the released first instruction set are transferred to the memory controller (45; 155) only by the security device (50; 250).

4. The method according to claim 3,
**characterized in that**
once the individual identifier has been entered, an authentication is carried out between the security device (50; 250) and the memory controller (45; 155) for establishing a secure connection (90; 200, 205); and that
the requests for executing the instructions of the released first instruction set are transferred to the memory controller (45; 155) via said secure connection.

5. The method according to any one of the preceding claims,
**characterized in that**
under the control of the security device (50; 250), a user interface is established for entering the requests to execute the instructions of the released first instruction set.

6. The method according to any one of the preceding claims,
**characterized in that**
a plurality of individual identifiers are assigned to the predetermined memory area (35; 165), or a respective individual identifier is assigned to a plurality of separate predetermined memory areas (271 - 274) of the solid state data memory (30; 160), wherein an individual first instruction set is stored for each individual identifier; and that
once one of the individual identifiers has been entered, the associated individual first instruction set is released.

7. A data storage system for protecting at least one predetermined memory area (35; 165) of a solid state data memory (30; 160) against unauthorized access, comprising
a solid state data memory (30; 160) including a predetermined memory area (35; 165);
a memory controller (45; 155);
a memory device (60, 75; 170, 174) which stores a first, secure instruction set, wherein said first instruction set includes a first instruction for enabling the predetermined memory area (35; 165) and a second instruction for disabling the predetermined memory area (35; 165);
a user-related security device (50; 250) which is protected by an individual identifier and is adapted to be responsive to the receipt of an individual identifier by releasing the first instruction set for use by the memory controller (45; 155);
wherein the memory controller (45; 155) is adapted
- to be responsive to the first instruction by causing the predetermined memory area (35; 165) to be visible on a display device (120; 220);
- to edit the displayed predetermined memory area (35, 165) using a second, non-secure instruction set; and
- to be responsive to the second instruction by causing the predetermined memory area (35; 165) to be hidden.

8. The data storage system according to claim 7,
**characterized in that**
the security device (50; 250) is adapted to transfer requests for executing the instructions of the released first instruction set to the memory controller (45; 155) via a wired or wireless connection (90; 200, 205).

9. The data storage system according to claim 8,
**characterized in that**
the security device (50; 250) is adapted to control an authentication between the security device (50; 250) and the memory controller (45; 155) for establishing a secure wired or secure wireless connection (90; 200, 205) so that the requests for executing the instructions of the first instruction set can be transferred via said secure connection.

10. The data storage system according to any one of claims 7 to 9, **characterized in that**
the solid state data memory (30), the memory controller (45), and the security device (50) are implemented in a removable data storage device (20), in particular in a memory stick, which has an interface means (100) for communication with a computer device (110).

11. The data storage system according to any one of claims 7 to 9, **characterized in that**
the solid state data memory (160) and the security device (250) are arranged in separate housings; and that the solid state data memory (160) has an interface means for communication with a computer device (210) and the security device (250).

12. The data storage system according to claim 11,
**characterized in that** the solid state data memory (160) forms part of a removable data storage device (140), in particular of a memory stick.

13. The data storage system according to claim 10, 11, or 12, **characterized in that**
the computer device (110; 210) is adapted to provide a user interface adapted to enable communication of a user with the security device.

14. The data storage system according to any one of claims 7 to 13, **characterized in that**
the security device (50; 250) is a security module or a chip card.

15. The data storage system according to any one of claims 7 to 14, **characterized in that**
the solid state data memory (30; 160) contains a plurality of predetermined memory areas (271 - 274), each of which has a separate user-related security device assigned thereto, which is protected by an individual identifier; that
the memory device (60, 75; 170, 174) stores an individual first instruction set for each security device; and that
each user-related security device is adapted to be responsive to the receipt of the respective individual identifier by releasing its assigned first instruction set for use by the memory controller (45; 155).

## Revendications

1. Procédé de protection d'au moins une zone de stockage déterminée (35 ; 165) d'une mémoire de données à semiconducteur (30 ; 60) contre un accès non autorisé, comprenant les étapes consistant en :
la mémorisation d'un premier ensemble d'instructions sécurisé pour un contrôleur de mémoire (45 ; 155) pour la commande de la mémoire de données à semiconducteur (30 ; 60), ledit premier ensemble d'instructions comprenant une première instruction pour l'activation d'une zone de stockage déterminée (35 ; 165) et une deuxième instruction pour la désactivation de la zone de stockage déterminée (35 ; 165) ;
la saisie sur un moyen d'entrée (110 ; 210) d'un identifiant individuel pour un dispositif de sécurité (50 ; 250) spécifique à un utilisateur et protégé par un identifiant individuel ;
en réponse à l'identifiant individuel, la validation du premier ensemble d'instructions sécurisé pour exploitation par le contrôleur de mémoire (45 ; 155) par commande du dispositif de sécurité spécifique à l'utilisateur (50 ; 250), la zone de stockage déterminée (35 ; 165), si elle a été activée par commande du contrôleur de mémoire (45 ; 155), étant rendue visible sur un dispositif d'affichage (120 ; 220) et pouvant être traitée par commande du contrôleur de mémoire (45 ; 155) en exploitant un deuxième ensemble d'instructions non sécurisé, et la zone de stockage déterminée étant masquée, si elle a été désactivée par commande du contrôleur de mémoire (45 ; 155).

2. Procédé selon la revendication 1, **caractérisé en ce que** le premier ensemble d'instructions comprend une troisième instruction pour la configuration de toute la zone de stockage de la mémoire de données à semiconducteur (30 ; 160).

3. Procédé selon la revendication 1 ou 2, **caractérisé en ce que** des appels d'exécution des instructions du premier ensemble d'instructions validé ne sont transmis que par le dispositif de sécurité (50 ; 250) au contrôleur de mémoire (45 ; 155).

4. Procédé selon la revendication 3, **caractérisé en ce que**
après saisie de l'identifiant individuel, une authentification est effectuée entre le dispositif de sécurité (50 ; 250) et le contrôleur de mémoire (45 ; 155) pour l'établissement d'une connexion sécurisée (90 ; 200, 205), et **en ce que**
les appels d'exécution des instructions du premier ensemble d'instructions validé sont transmis au contrôleur de mémoire (45 ; 155) via la connexion sécurisée.

5. Procédé selon l'une des revendications précédentes, **caractérisé en ce qu'**une interface d'utilisateur pour l'entrée des appels d'exécution des instructions du premier ensemble d'instructions validé est générée par commande du dispositif de sécurité (50 ; 250).

6. Procédé selon l'une des revendications précédentes, **caractérisé en ce que**
plusieurs identifiants individuels sont affectés à la zone de stockage déterminée (35 ; 165), ou plusieurs zones de stockage déterminées (271-274) séparées de la mémoire de données à semiconducteur (30 ; 160) sont affectées chacune à un identifiant individuel, un premier ensemble d'instructions individuel étant mémorisé pour chaque identifiant individuel, et **en ce que**
le premier ensemble d'instructions individuel associé est validé après saisie d'un des identifiants individuels.

7. Système de stockage de données pour la protection d'au moins une zone de stockage déterminée (35 ; 165) d'une mémoire de données à semiconducteur (30 ; 160) contre un accès non autorisé, comprenant :
une mémoire de données à semiconducteur (30 ; 160) avec une zone de stockage déterminée (35 ; 165),
un contrôleur de mémoire (45 ; 155),
un dispositif de stockage (60, 75 ; 170, 174) dans lequel un premier ensemble d'instructions sécurisé est stocké, le premier ensemble d'instructions comprenant une première instruction pour l'activation de la zone de stockage déterminée (35 ; 165) et une deuxième instruction pour la désactivation de la zone de stockage déterminée (35 ; 165),
un dispositif de sécurité (50 ; 250) spécifique à un utilisateur protégé par un identifiant individuel, est conçu pour valider le premier ensemble d'instructions pour exploitation par le contrôleur de mémoire (45 ; 155) en réponse à la réception d'un identifiant individuel,
dans lequel le contrôleur de mémoire (45 ; 155) est conçu
- pour rendre la zone de stockage déterminée (35 ; 165) visible sur un dispositif d'affichage (120 ; 220) en réponse à la première instruction,
- pour traiter la zone de stockage déterminée (35 ; 165) affichée en exploitant un deuxième ensemble d'instructions non sécurisé, et
- pour provoquer le masquage de la zone de stockage déterminée (35 ; 165) en réponse à la deuxième instruction.

8. Système de stockage de données selon la revendication 7, **caractérisé en ce que** le dispositif de sécurité (50 ; 250) est conçu pour transmettre au contrôleur de mémoire (45 ; 155) les appels d'exécution des instructions du premier ensemble d'instructions validé via une connexion filaire ou sans fil (90 ; 200, 205).

9. Système de stockage de données selon la revendication 8, **caractérisé en ce que** le dispositif de sécurité (50 ; 250) est conçu pour commander une authentification entre le dispositif de sécurité (50 ; 250) et le contrôleur de mémoire (45 ; 155) pour la génération d'une connexion filaire ou sans fil sécurisée (90 ; 200, 205), de manière à permettre la transmission des appels d'exécution des instructions du premier ensemble d'instructions via la connexion sécurisée.

10. Système de stockage de données selon l'une des revendications 7 à 9, **caractérisé en ce que** la mémoire de données à semiconducteur (30), le contrôleur de mémoire (45) et le dispositif de sécurité (50) sont implémentés dans un support amovible (20), en particulier dans une clé USB présentant un dispositif d'interface (100) pour la communication avec un dispositif informatique (110).

11. Système de stockage de données selon l'une des revendications 7 à 9, **caractérisé en ce que**
la mémoire de données à semiconducteur (160) et le dispositif de sécurité (250) sont agencés dans des boîtiers distincts, et **en ce que**
la mémoire de données à semiconducteur (160) présente un dispositif d'interface pour la communication avec un dispositif informatique (210) et le dispositif de sécurité (250).

12. Système de stockage de données selon la revendication 11, **caractérisé en ce que** la mémoire de données à semiconducteur (160) fait partie d'un support amovible (140), en particulier d'une clé USB.

13. Système de stockage de données selon la revendication 10, 11 ou 12, **caractérisé en ce que** le dispositif informatique (110 ; 210) est conçu pour procurer une interface d'utilisateur conçue pour permettre une communication d'un utilisateur avec le dispositif de sécurité.

14. Système de stockage de données selon l'une des revendications 7 à 13, **caractérisé en ce que** le dispositif de sécurité (50 ; 250) est un module de sécurité ou une carte à puce.

15. Système de stockage de données selon l'une des revendications 7 à 14, **caractérisé en ce que**
la mémoire de données à semiconducteur (30 ; 160) comprend plusieurs zones de stockage déterminées (271-274), à chacune desquelles est affecté un dispositif de sécurité séparé, spécifique à un utilisateur et protégé par un identifiant individuel, **en ce que**
un premier ensemble d'instructions individuel est mémorisé dans le moyen de stockage (60, 75 ; 170, 174) pour chaque dispositif de sécurité, et **en ce que**
chaque dispositif de sécurité spécifique à l'utilisateur est conçu pour valider le premier ensemble d'instructions qui lui est associé pour exploitation par le contrôleur de mémoire (45 ; 155) en réponse à la réception de l'identifiant individuel respectif.
